# EUROPÄISCHE PATENTSCHRIFT

(11) **EP 1 947 034 B1**
(45) Veröffentlichungstag und Bekanntmachung des Hinweises auf die Patenterteilung: **24.06.2009**
(21) Anmeldenummer: 08000528.3
(22) Anmeldetag: 12.01.2008
(51) Int. Cl.: B65G 1/04, B65G 15/42

(54) **Insbesondere schienengebundener Transportroboter mit Förderer**
Transport robots with conveyors, in particular rail-driven examples
En particulier robot de transport roulant sur rails doté d'un transporteur

(30) Priorität: 20.01.2007 DE 202007000874 U
(43) Veröffentlichungstag der Anmeldung: 23.07.2008
(73) Patentinhaber: Beer, Christian, 6858 Schwarzach (AT)
(72) Erfinder: Beer, Christian, 6858 Schwarzach (AT)
(74) Vertreter: Riebling, Peter

(56) Entgegenhaltungen:
- EP-A- 0 462 518
- EP-A- 0 963 926
- US-A- 3 664 534

## Beschreibung

Gegenstand der Erfindung ist ein insbesondere schienengebundener Transportroboter mit einem Förderer nach dem Oberbegriff des Patentanspruchs 1.

Mit dem Gegenstand der DE 198 42 752 B4 ist ein sogenanntes Transfersystem mit Werkstückträgern bekannt geworden, welches dazu geeignet ist, von einem bestimmten Aufnahmeplatz zu bearbeitende Werkstücke aufzunehmen und an einer bestimmten Abladeposition diese aufgenommenen Gegenstände wieder zu entladen. Das Transfersystem besteht aus einem Schienensystem, welches offen oder geschlossen sein kann und welches mit oder ohne Weichen ausgebildet sein kann.

Auf dem Schienensystem sind selbstfahrende Werkstückträger angeordnet, wobei in jedem Werkstückträger ein Antriebsmotor angeordnet ist, und mindestens eine Batterie und eine zugeordnete Steuerung.

Die Art und Ausbildung der Steuerung ist beispielsweise in der DE 10 2005 012 561 A1 beschrieben.

Der Offenbarungsinhalt der beiden Druckschriften soll voll umfänglich von dem Offenbarungsinhalt der vorliegenden Erfindung umfasst sein.

Bei DE 198 42 752 B4 waren lediglich Werkstückträger bekannt, was bedeutet, dass diese nur bestimmt waren, bestimmte Werkstücke von einer Bearbeitungsstation zu einer anderen zu befördern. Zu diesem Zweck waren auf den selbstfahrenden Werkstückträgern Aufnahmen angeordnet, in welche die zu haltenden Gegenstände aufgenommen wurden, damit diese fest fixiert an eine bestimmte andere Bearbeitungsstation verbracht wurden.

Ein schienengebundener Transfersystem mit einem Förderer ist auch aus des US 3 664 534 bekannt.

Nachteil des bekannten Systems war jedoch, dass ein Bestückungs- und Entladesystem mit Schachteln, Kisten oder dergleichen nicht möglich war.

Es sind auch durch die Fa. TMS Automotion GmbH, A-4030 Linz selbstfahrende Transportgeräte bekannt, auf denen quer zur Fahrtrichtung des Transportgerätes ausgerichtete Querförderbänder angeordnet sind, auf denen Güter aufgenommen werden können. Diese Güter werden am Ursprungsort manuell oder mittels externer Fördereinrichtungen auf die Förderbänder des Transportgerätes aufgeladen, dann per Transportgerät zum Zielort transportiert und dort mittels der Förderbänder des Transportgerätes wieder abgeladen. Nachteil ist, dass beim Aufladen von Gütern auf die Förderbänder des Transportgerätes Handarbeit oder externe Fördereinrichtungen nötig sind.

Der Erfindung liegt deshalb die Aufgabe zugrunde, ein bekanntes Transfersystem mit Werkstückträgern so weiterzubilden, dass eine vollständig neuartige Bestückung mit Hilfe von Kisten und in Kisten gestapelten Gegenständen möglich ist, welche ohne Personal ausschließlich durch den Transportroboter selbst erfolgt und damit wesentlich kostengünstiger ist, als beim Stand der Technik.

Zur Lösung der gestellten Aufgabe ist die Erfindung durch die Merkmale des Patentanspruches 1 gekennzeichnet.

Wesentlich dabei ist, dass auf dem Werkstückträger - der nunmehr Transportroboter genannt wird - mindestens ein Förderer angeordnet ist, der nicht nur zur selbsttätigen Abgabe von Gütern aus einer Lagereinheit dient, sondern auch zur selbsttätigen Aufnahme von Gütern aus einer Lagereinheit geeignet ist, wobei der Förderer mindestens einen über einen Antriebsmotor antreibbaren Riemen aufweist, auf dessen äußerer Oberfläche, welche mit den aufzunehmenden Gütern kontaktiert, ein sich nur über einen Teil der Gesamtlänge des mindestens einen Riemens erstreckendes, vertikal erhöhtes Riementeil angeordnet ist.

In einer bevorzugten Ausgestaltung der Erfindung ist dieser Förderer als Querförderer ausgebildet und seine Förderbahn ist quer zur Transportrichtung des Gleissystems ausgebildet.

Die Erfindung ist demzufolge nicht auf die Anordnung eines Querförderers auf dem Transportroboter beschränkt.

Neben einem Querförderer, dessen Förderrichtung quer zur Transportrichtung des Transportroboters ausgerichtet ist, werden deshalb auch Längsförderer längs zur Transportrichtung, oder Schrägförderer schräg zur Transportrichtung beansprucht.

Bei der Anordnung derartiger Förderer auf einem Transportroboter muss dafür gesorgt werden, dass der Antriebsmotor des Förderers mit Strom versorgt wird. Zu diesem Zweck sieht die Erfindung vor, dass neben der Stromversorgung für den Fahrantrieb des Transportroboters noch eine weitere Stromversorgung vorgesehen ist, die der Stromversorgung des Antriebssystems für den Förderer dient.

Eine solche Stromversorgung ist bevorzugt als hochkapazitiver Elektrolytkondensator ausgebildet, was in der Umgangssprache auch ein "Gold-Kondensator" bezeichnet wird. Man verwendet auch den Begriff "Gold-Cap".

Neben derartigen hochkapazitiven aufladbaren Kondensatoren sieht eine weitere Ausführung der Erfindung vor, aufladbare Batterien in dem Transportroboter mitzuführen, der das Antriebssystem des Förderers mit Strom versorgt.

Der Einfachheit halber wird in der folgenden Beschreibung nur noch die Ausbildung eines Querförderers beschrieben, dessen Förderrichtung quer zur Transportrichtung des Transportroboters verläuft. Es wurde bereits schon eingangs darauf hingewiesen, dass die Erfindung nicht darauf beschränkt ist und das lediglich aus Vereinfachungsgründen die folgende Beschreibung nur auf diese eine Ausführung gerichtet ist.

Der genannte Querförderer ist als Riemenförderer ausgebildet, wobei eine Anzahl von parallel zueinander verlaufenden und gemeinsam angetriebenen Riemen vorgesehen ist. Hierbei ist es nicht erforderlich, alle Riemen anzutreiben. Es reicht zum Beispiel aus, bei vier Riemen die jeweils Äußeren anzutreiben und es ist sogar möglich, nicht nur einen Antriebsmotor, sondern sogar zwei Antriebsmotoren zu verwenden, wobei der eine Antriebsmotor den einen Riemen oder das eine Riemenpaar und der Antriebsmotor das andere Riemenpaar antreibt.

Es ist erfindungsgemäß vorgesehen, dass zum Transport von mit Gegenständen beladenen Kisten aus einem Regal heraus, eine besondere Übergabevorrichtung auf dem Querförderer angeordnet ist. Hier sieht die Erfindung vor, dass die Gurte nicht einfach durchlaufende und in sich ebene und vorsprungsfreie Riemen sind, sondern dass auf einen solchen - beispielsweise als Kunststoffriemen, Gummiriemen oder Lederriemen - ausgebildeten Förderriemen ein über die Oberfläche dieses Riemens vertikal erhöht angebrachtes Riementeil angeordnet ist. Eine separate Hubeinrichtung für den Förderer oder dessen Riemen kann durch das Erfindungsgemäße vertikal erhöhte Riementeil auf dem Riemen entfallen, so dass der Transportroboter kostengünstiger wird.

Für den Fall, dass das Gurtband des Querförderers aus einem Kunststoffband besteht, wäre dann das erhöht und nur stückweise vorhandene Riementeil aus einem Polyurethan-Kunststoff, das auf das Gurtband aufgeklebt ist.

Damit ergibt sich ein Greifer-Mechanismus, der geeignet ist, selbsttätig eine in einem Regal auf einem Rollenband oder einer Gleitbahn liegenden Kiste aus dem Regal abzuholen und auf die Oberfläche des Querförderers zu fördern.

Zu diesem Zweck sieht die Erfindung zunächst vor, dass die Förderlänge des Querförderers auf dem Transportroboter so gewählt ist, dass das vordere Aufnahmeende des Querförderers unterhalb von Kisten gelangt, die in einem Regalfach angeordnet sind. Zu diesem Zweck ist vorgesehen, dass der Querförderer also unter das vordere Ende der Kisten fahrbar ist, so dass sich das fordere Ende des Querförderers unterhalb des Kistenendes befindet.

Bei diesem Verfahrenszustand wird vorausgesetzt, dass der erhöhte Riementeil auf dem Gurtriemen noch nicht in Eingriff mit der Kiste ist.

Sobald die Überlappung zwischen dem Gurtband und dem vorderen Ende der Kiste hergestellt ist, wird das Gurtband um eine kurze Strecke verfahren um dafür zu sorgen, dass das vordere Ende des Riementeils unter die vordere Kante der aufzunehmenden Kiste gelangt. Die Kiste wird dann um ein kleines Stück angehoben (um z. B. 2 bis 3 mm) und aufgrund der so entstehenden Reibung gelingt es nun bei weiterlaufendem Gurtband die Kiste aus dem Regal zu ziehen und auf die Oberfläche des Querförderers zu verbringen.

Damit wird also ein automatisches Bestückungssystem des Querförderers mit derartigen Kisten beschrieben, wobei entscheidend ist, dass die Aufnahme der Kiste nur durch Reibungsschluss eines erhöht angebrachten Riementeils auf dem Gurtband des Querförderers in Verbindung mit der aufzunehmenden Kiste erfolgt.

Hierbei ist es im übrigen gleichgültig, ob das Gurtband ein durchgehendes flaches Band ist (Riemen) oder ob das Gurtband als Zahnriemen ausgebildet ist, auf dessen Oberfläche das erhöhte Riementeil aufvulkanisiert ist.

Neben der Verwendung eines Zahnriemens oder eines Flachriemens können auch sämtliche anderen Riemen verwendet werden, wie z. B. Schnurriemen oder Ketten. Wesentlich hierbei ist, dass stückweise auf der Länge des Gurtbandes ein erhöhtes Riementeil aufgebracht ist, dessen vorderes Ende zum Anheben der Kiste geeignet ist und das einen geeigneten Reibungsschluss mit der Kiste in der Weise erzeugen soll, dass die Reibung zwischen diesem Riementeil und der Kiste größer ist als die Reibung zwischen der Kiste und der Lagerfläche auf der die Kiste lagert.

Zu diesem Zweck kann die Kiste beispielsweise auf einem Rollenband, einer Gleitbahn oder dergleichen gelagert sein.

Im Folgenden wird die Erfindung anhand von lediglich einen Ausführungsweg darstellende Zeichnungen näher erläutert. Hierbei gehen aus den Zeichnungen und ihrer Beschreibung weitere wesentliche Merkmale und Vorteile der Erfindung hervor.

Es zeigen:
- Figur 1:: perspektivische Ansicht eines Transportroboters in Entnahmestellung an einem Regal;
- Figur 2:: Draufsicht auf die Anordnung nach Figur 1;
- Figur 3:: eine perspektivische Ansicht des Transportroboters mit darauf befestigtem Querförderer;
- Figur 4:: der Querförderer nach den Figuren 1 bis 3 zum Beginn der Entnahme;
- Figur 5:: der Querförderer nach Figur 4 bei fortschreitender Entnahme.

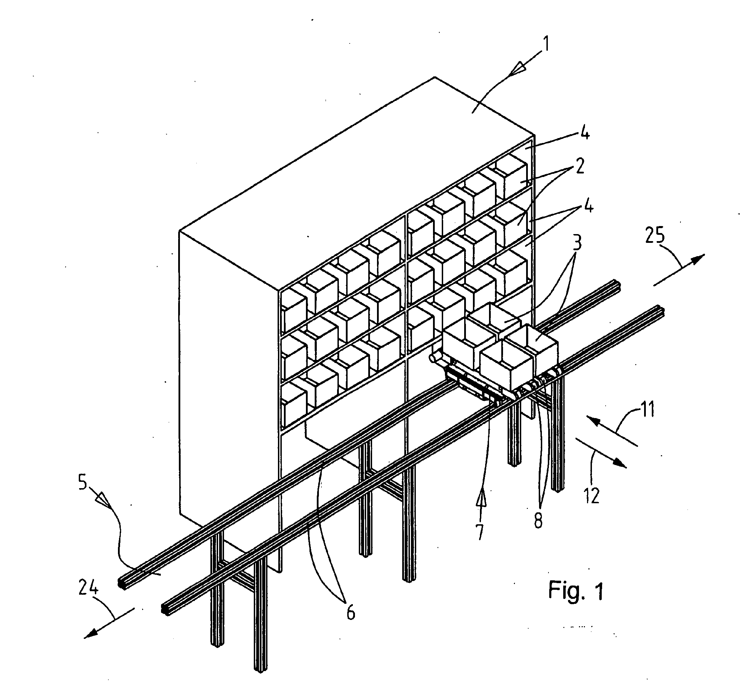

In Figur 1 ist allgemein ein Regal 1 dargestellt, welches aus mehreren parallel zueinander angeordneten Fächern 4 besteht, wobei in den Fächern eine beliebige Anzahl von Kisten 2, 3 angeordnet sind. Die Kisten sollen nun einfach oder mehrfach auf die Oberfläche eines Transportroboters 7 gebracht werden. Der Transportroboter 7 ist hierbei als selbstfahrende, autarke Einheit ausgebildet (siehe DE 198 42 752 B4), die von einer bestimmten Steuerung (siehe DE 10 2005 012 561 A1) versorgt wird. Im Mittelpunkt der beiden oben genannten Druckschriften steht die Tatsache, dass die Transportroboter 7 praktisch einen autarken Fahrbetrieb ermöglichen und nicht von einer zentralen Steuerung versorgt sind, sondern selbsttätig arbeiten.

Der Transportroboter 7 ist deshalb auf einer Transportstrecke 5 in den Längsrichtungen 24, 25 selbstfahrend ausgebildet, wobei die Transportstrecke 5 aus parallel zueinander angeordneten Schienen 6 besteht.

Erfindungsgemäß ist nun auf dem Transportroboter 7 ein Querförderer 8 angeordnet, dessen Förderrichtung 11, 12 quer zur Längsachse des Schienensystems 5 mit den Schienen 6 und damit quer zu den Längsrichtungen 24, 25 der Bewegung des Transportroboters 7 gerichtet ist. In der gezeigten Entnahmeposition fährt nun der Querförderer 8 unter die Unterkante von jeweils zwei Kisten 3 und durch kurze Antriebsbewegungen der Gurtbänder 14 des Querförderers 8 wird somit ein erstes Paar von Kisten und danach ein zweites Paar von Kisten auf den Querförderer aufgenommen.

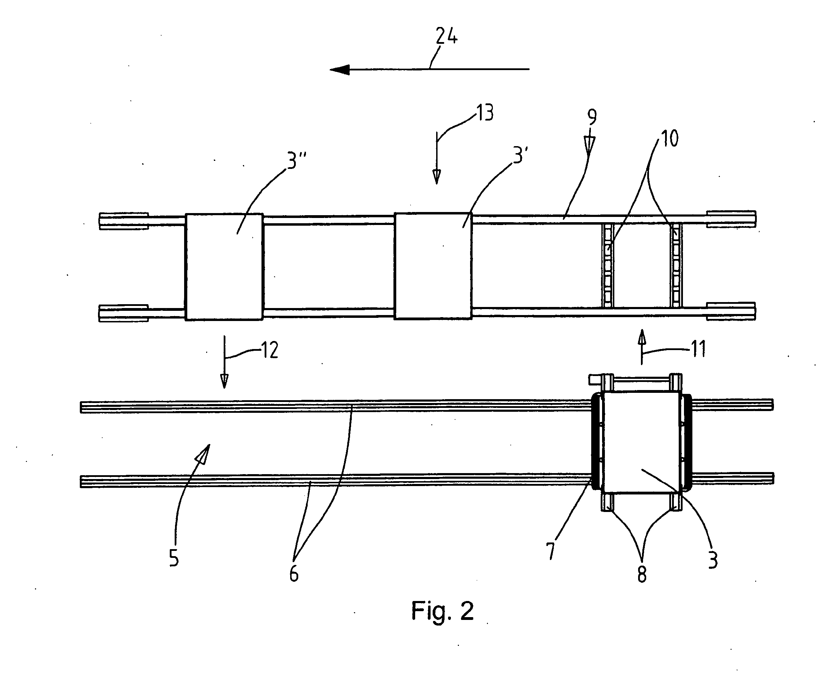

In Figur 2 ist in der Draufsicht erkennbar, dass die jeweils aufzunehmende Kiste oder das Kistenpaar auf einer Ablage 9 ruht und auf der Ablage in Richtung der Transportrichtung des Querförderers 8 ein Rollenband 10 angeordnet ist, auf dem ein oder mehrerer Kisten angeordnet sind.

In Figur 2 ist dargestellt, dass der Transportroboter 7 auch entsprechend eine Kiste 3, die auf seinem Querförderer 8 ruht in Querrichtung 11 in eine solche Ablage 9 einbringen kann.

Zu diesem Zweck wird deshalb die auf dem Querförderer 8 ruhende Kiste 3 durch Antrieb der Gurtbänder 14 des Querförderers auf das Rollenband 10 der Ablage 9 gefördert.

Die Ablage 9 ist ebenfalls als Längsförderer oder als Gleitbahn ausgebildet, so dass die abgeladene Kiste 3 in Längsrichtung 24 nach links verschoben werden kann und in die Stellung 3' verbracht wird und dort beispielsweise in Querrichtung 13 bestückt wird. Danach wird die Kiste 3 weiter in Längsrichtung 24 nach links in die Stellung 3" gebracht und in Querrichtung 12 wieder auf den Transportroboter 7 aufgestellt.

Es versteht sich von selbst, dass eine Vielzahl von Transportrobotern 7 auf der Transportstrecke 5 verfahren und der vordere Transportroboter bereits schon zu einer andern Abladeposition kommt, wobei der hintere Transportroboter die Kiste aus der Position 3" in Pfeilrichtung 12 aus der Ablage 9 entnimmt.

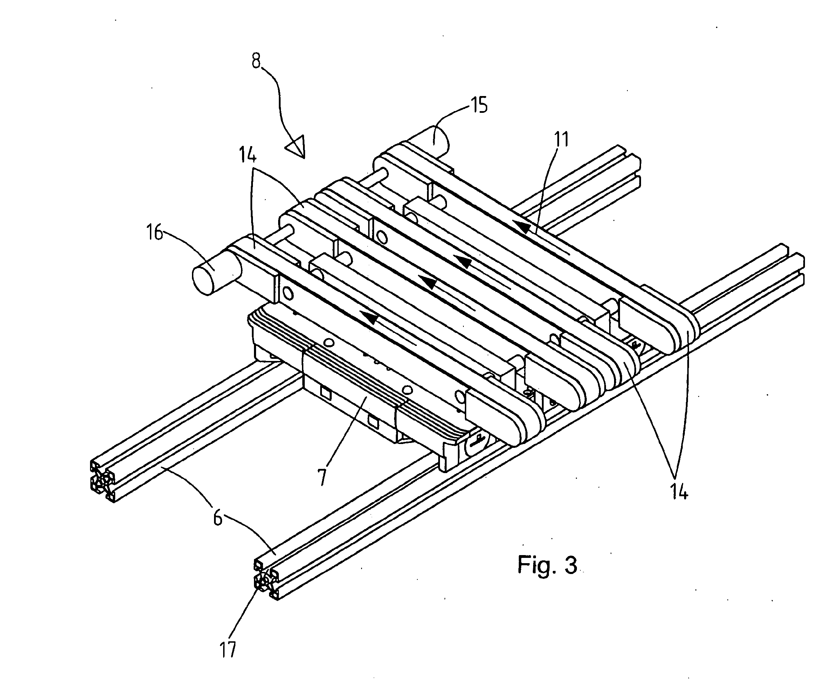

Die Figur 3 zeigt weitere Einzelheiten des Querförderers. Hier ist zu entnehmen, dass jeweils zwei Paare von Gurtbändern 14 durch jeweils einen Antriebsmotor 15, 16 angetrieben sind und der gesamte Querförderer 8 auf dem Chassis des Transportroboters 7 aufgebracht ist.

Zum schienengebundenen Transport des Transportroboters 7 auf der Transportstrecke 5 greift der jeweilige Transportroboter 7 mit nicht näher dargestellten Gleitrollen in eine zugeordnete Längsnut 17 an mindestens einer Schiene 6 ein. Der Vorwärtsantrieb erfolgt dadurch, dass an der Unterseite des jeweiligen Transportroboters 7 ein gummibelegtes Antriebsrad vorhanden ist, welches auf der Oberfläche einer Schiene 6 abrollt und hierdurch einen Reibungsschluss erzeugt. Durch entsprechenden Antrieb dieses Antriebsrades wird somit der Transportroboter 7 in Längsrichtung der Transportstrecke 5 verfahren.

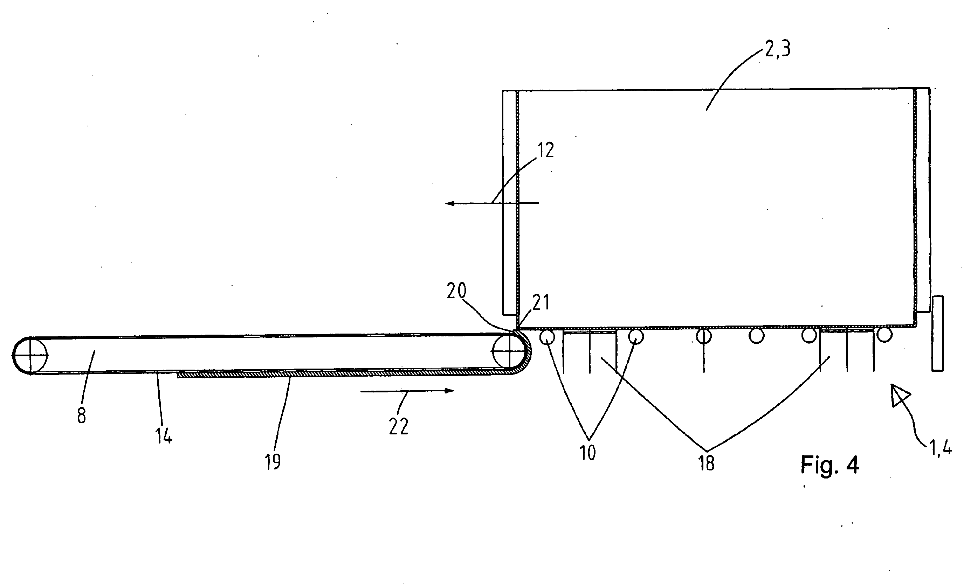

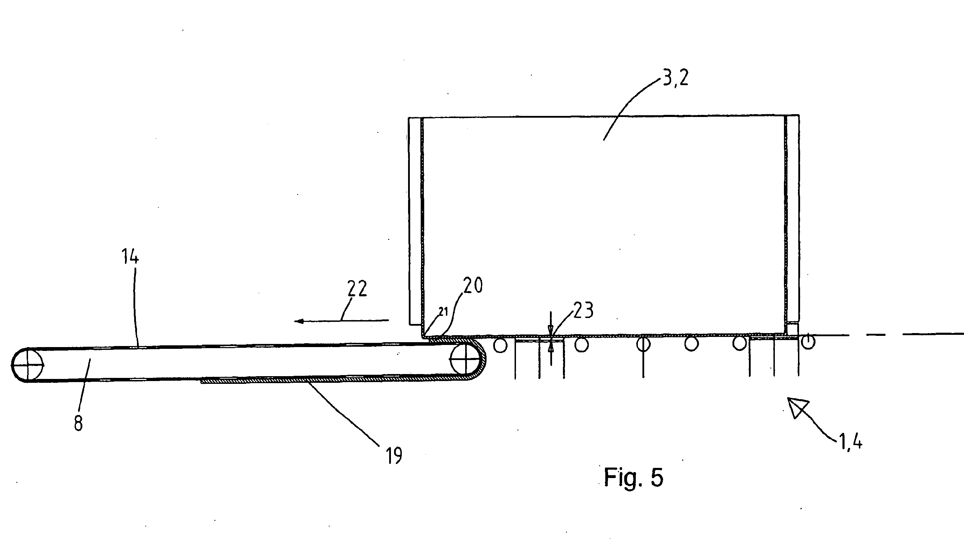

In Figur 4 und 5 ist der Aufnahmevorgang einer einzigen Kiste 3 aus dem Regal 1 dargestellt. Anhand der Figur 1 wurde jedoch auch klargestellt, dass nicht nur eine einzige Kiste entnommen werden kann, sondern dass derartige Kisten auch paarweise entnehmbar sind.

Bezogen auf das Ausführungsbeispiel der Figuren 4 und 5 ist erkennbar, dass auf der Oberfläche jeden Gurtbandes 14 ein erhöhtes Riementeil 19 angeordnet ist, welches beispielsweise mit dem Gurtband 14 verklebt oder vulkanisiert ist.

In der Entnahmeposition wird somit das gesamte Gurtband 14 in Pfeilrichtung 22 verfahren, bis dass das vordere Ende 20 des Riementeils 19 unter die vordere Kante 21 der Kiste 3 gelangt.

Nachdem diese Kiste 3 auf einer reibungsvermindernden Ablagefläche 18 liegt, die z. B. als Rollenband 10 ausgebildet ist, gelingt es bei dem Weitertransport des Gurtbandes 14 in Pfeilrichtung 22, dass das vordere Ende 20 des Riementeils 19 die Kante 21 der Kiste gemäß Figur 5 mitnimmt und diese auf das Gurtband 14 in Pfeilrichtung 22 zieht.

Hierbei wird vorausgesetzt, dass die Kiste 3 um ein geringes Maß angehoben wird, was aus dem Spaltmaß 23 in Figur 5 erkennbar ist. Somit ist sichergestellt, dass die Kiste von der Ablagefläche 18 abgehoben wird und nur noch auf dem reibungsvermindernden Rollenband 10 aufliegt.

Statt der Anordnung eines reibungsvermindernden Rollenbandes 10 sind selbstverständlich auch andere Möglichkeiten vorgesehen, um die Kiste mit möglichst geringer Reibung aus dem Regalfach ziehen zu können. Statt dem Rollenband 10 kann auch eine Gleitbahn vorgesehen werden

Statt des erhöht angebrachten Riementeils kann auch eine Nocke verwendet werden. Es können auch mehrere Nocken im Abstand hintereinander liegend den erhöhten Riementeil bilden. Statt der Nocke können auch ein oder mehrere Stifte verwendet werden.

### Zeichnungslegende

- 1: Regal
- 2: Kisten
- 3: Kisten 3', 3"
- 4: Fach
- 5: Transportstrecke
- 6: Schienen
- 7: Transportroboter
- 8: Querförderer
- 9: Ablage
- 10: Rollenband
- 11: Querrichtung
- 12: Querrichtung
- 13: Querrichtung
- 14: Gurtband
- 15: Antriebsmotor
- 16: Antriebsmotor
- 17: Längsnut
- 18: Ablagefläche
- 19: Riementeil
- 20: Vorderes Ende
- 21: Kante
- 22: Querrichtung
- 23: Spaltmaß
- 24: Längsrichtung
- 25: Längsrichtung

## Patentansprüche

1. Transportroboter (7) mit einem Förderer (8) zur selbsttätigen Abgabe von Gütern (2, 3) in eine Lagereinheit (1, 4) hinein, **dadurch gekennzeichnet, dass** der Förderer (8) auch zur selbsttätigen Aufnahme von Gütern (2, 3) aus einer Lagereinheit (1, 4) geeignet ist **dadurch** dass der Förderer (8) mindestens einen über einen Antriebsmotor (15,16) antreibbaren Riemen (14) aufweist, auf dessen äußerer Oberfläche, welche mit den aufzunehmenden Gütern (2, 3) kontaktiert, ein sich nur über einen Teil der Gesamtlänge des mindestens einen Riemens (14) erstreckendes, vertikal erhöhtes Riementeil (19) angeordnet ist.

2. Transportroboter (7) nach Anspruch 1, **dadurch gekennzeichnet, dass** die vertikale Überhöhung des Riementeils (19) über den zugeordneten Riemen (14) bei etwa 100% der vertikalen Höhe des zugeordneten Riemens (14) liegt, und insbesondere bei etwa 2 bis 3 mm liegt.

3. Transportroboter (7) nach Anspruch 1 oder 2, **dadurch gekennzeichnet, dass** die Länge des vertikal erhöhten Riementeils (19) gleich oder kleiner ist, als die Hälfte der Gesamtlänge des mindestens einen Riemens (14).

4. Transportroboter (7) nach einem der Ansprüche 1 bis 3, **dadurch gekennzeichnet, dass** die Breite des vertikal erhöhten Riementeils (19) etwa 10% der Breite des aufzunehmenden Gutes (2, 3) entspricht.

5. Transportroboter (7) nach einem der Ansprüche 1 bis 4, **dadurch gekennzeichnet, dass** der mindestens eine Riemen (14) ein durchgehendes flaches Band ist, ein Keilriemen, ein Zahnriemen, ein Schnurriemen oder eine Kette.

6. Transportroboter (7) nach einem der Ansprüche 1 bis 5, **dadurch gekennzeichnet, dass** der mindestens eine Riemen (14) im Wesentlichen horizontal über mindestens zwei Umlenkrollen verläuft.

7. Transportroboter (7) nach einem der Ansprüche 1 bis 6, **dadurch gekennzeichnet, dass** der mindestens eine Riemen (14) aus Kunststoff besteht, insbesondere aus Polyurethan (PUR).

8. Transportroboter (7) nach einem der Ansprüche 1 bis 7, **dadurch gekennzeichnet, dass** das vertikal erhöhte Riementeil (19) auf dem zugeordneten Riemen (14) aufgeklebt oder aufvulkanisiert ist.

9. Transportroboter (7) nach einem der Ansprüche 1 bis 8, **dadurch gekennzeichnet, dass** sich mehrere gleich lange Riemen (14) auf dem Förderer (8) befinden, welche durch einen einzigen oder aber durch mehrere Antriebsmotoren (15,16) antreibbar sind.

10. Transportroboter (7) nach Anspruch 9, **dadurch gekennzeichnet, dass** sich mindestens zwei Paare von gleich langen Riemen (14) auf dem Förderer (8) befinden, welche durch je einen Antriebsmotor (15, 16) pro Riemenpaar antreibbar sind.

11. Transportroboter (7) nach einem der Ansprüche 1 bis 10, **dadurch gekennzeichnet, dass** der Förderer (8) ein Querförderer ist, welcher im Wesentlichen horizontal quer und/oder in und/oder horizontal schräg zu den Längsrichtungen (24, 25) der Transportbewegung des Transportroboters (7) verfahrbar ist.

12. Transportroboter (7) nach einem der Ansprüche 1 bis 11, **dadurch gekennzeichnet, dass** der Förderer (8) über die auf dem Transportroboter (7) befindliche autarke Antriebseinheit (15, 16) unabhängig von einer übergeordneten el. Steuerung verfahrbar ist.

13. Transportroboter (7) nach Anspruch 12, **dadurch gekennzeichnet, dass** die Energieversorgung der Antriebseinheit (15, 16) für den Förderer (8) über einen wiederaufladbaren hochkapazitiven Elektrolytkondensator (Gold-Cap) erfolgt.

14. Transportroboter (7) nach Anspruch 12 oder 13, **dadurch gekennzeichnet, dass** die Energieversorgung der Antriebseinheit (15, 16) für den Förderer (8) über einen wiederaufladbare el. Akkumulatoren (Akkus) erfolgt.

15. Transportroboter (7) nach einem der Ansprüche 1 bis 14, **dadurch gekennzeichnet, dass** der Transportroboter (7) schienengebunden ist und in Längsrichtungen (24, 25) von Schienen (6) auf diesen verfahrbar ist.

16. Transportroboter (7) nach einem der Ansprüche 1 bis 14, **dadurch gekennzeichnet, dass** der Transportroboter nicht schienengebunden ist und vollkommen frei auf einer Fahrbahn zweidimensional verfahrbar ist.

17. Transportroboter (7) nach einem der Ansprüche 1 bis 16, **dadurch gekennzeichnet, dass** der Transportroboter (7) über eine autarke Antriebseinheit aufweist, wodurch der Transportroboter (7) unabhängig von einer übergeordneten el. Steuerung verfahrbar ist.

18. Transportroboter (7) nach einem der Ansprüche 1 bis 17, **dadurch gekennzeichnet, dass** das Riementeil (19) als Nocke oder Stift ausgebildet ist.

## Claims

1. Transport robot (7) with a conveyor (8) for automatically dispensing products (2, 3) into a storage unit (1, 4), **characterised in that** the conveyor (8) is also suitable for automatically receiving products (2, 3) from a storage unit (1, 4), **in that** the conveyor (8) has at least one belt (14) which can be driven by a drive motor (15, 16), on the outer surface of which belt, that is in contact with the products (2, 3) to be received, is arranged a vertically elevated belt part (19) extending only over a part of the total length of the at least one belt (14).

2. Transport robot (7) according to claim 1, **characterised in that** the vertical superelevation of the belt part (19) over the associated belt (14) is about 100% of the vertical height of the associated belt (14), and in particular is about 2 to 3 mm.

3. Transport robot (7) according to claim 1 or 2, **characterised in that** the length of the vertically elevated belt part (19) is equal to or smaller than half the total length of the at least one belt (14).

4. Transport robot (7) according to any one of claims 1 to 3, **characterised in that** the width of the vertically elevated belt part (19) corresponds to about 10% of the width of the product (2, 3) to be received.

5. Transport robot (7) according to any one of claims 1 to 4, **characterised in that** the at least one belt (14) is a continuous flat belt, a V-belt, a toothed belt, a strap or a chain.

6. Transport robot (7) according to any one of claims 1 to 5, **characterised in that** the at least one belt (14) extends substantially horizontally over at least two deflection pulleys.

7. Transport robot (7) according to any one of claims 1 to 6, **characterised in that** the at least one belt (14) consists of plastics material, in particular polyurethane (PUR).

8. Transport robot (7) according to any one of claims 1 to 7, **characterised in that** the vertically elevated belt part (19) is glued or vulcanised on the associated belt (14).

9. Transport robot (7) according to any one of claims 1 to 8, **characterised in that** a plurality of belts (14) of equal length are located on the conveyor (8), and can be driven by a single, or else by a plurality of drive motors (15, 16).

10. Transport robot (7) according to claim 9, **characterised in that** at least two pairs of belts (14) of equal length are located on the conveyor (8), and can be driven by one drive motor (15, 16) for each pair of belts.

11. Transport robot (7) according to any one of claims 1 to 10, **characterised in that** the conveyor (8) is a transverse conveyor, which can be moved substantially horizontally transversely and/or in and/or horizontally obliquely to the longitudinal directions (24, 25) of the transporting movement of the transport robot (7).

12. Transport robot (7) according to any one of claims 1 to 11, **characterised in that** the conveyor (8) can be moved by means of the self-sufficient drive unit (15, 16) located on the transport robot (7) independently of a superordinate electrical controller.

13. Transport robot (7) according to claim 12, **characterised in that** the energy of the drive unit (15, 16) for the conveyor (8) is supplied by means of a rechargeable high-capacity electrolyte capacitor (gold cap).

14. Transport robot (7) according to claim 12 or 13, **characterised in that** the energy of the drive unit (15, 16) for the conveyor (8) is supplied by means of a rechargeable electric battery (accumulator).

15. Transport robot (7) according to any one of claims 1 to 14, **characterised in that** the transport robot (7) is rail mounted and can be moved in the longitudinal directions (24, 25) of rails (6) on the latter.

16. Transport robot (7) according to any one of claims 1 to 14, **characterised in that** the transport robot is not rail mounted and can be moved completely freely two-dimensionally on a track.

17. Transport robot (7) according to any one of claims 1 to 16, **characterised in that** the transport robot (7) has a self-sufficient drive unit, so that the transport robot (7) can be moved independently of a superordinate electric controller.

18. Transport robot (7) according to any one of claims 1 to 17, **characterised in that** the belt part (19) is configured as a cam or pin.

## Revendications

1. Robot de transport (7) avec un convoyeur (8) pour déposer automatiquement des produits (2, 3) dans une unité de stockage (1, 4), **caractérisé en ce que** le convoyeur (8) est également apte à prendre automatiquement des produits (2, 3) dans une unité de stockage (1, 4) grâce au fait que le convoyeur (8) comporte au moins une courroie (14) qui est apte à être entraînée par un moteur d'entraînement (15, 16) et dont la surface extérieure en contact avec les produits à prendre (2, 3) porte un élément de courroie (19) saillant verticalement et s'étendant sur une partie seulement de la longueur totale de ladite courroie (14).

2. Robot de transport (7) selon la revendication 1, **caractérisé en ce que** la saillie verticale de l'élément de courroie (19) sur la courroie associée (14) représente environ 100% de la hauteur verticale de ladite courroie associée (14), et est en particulier de 2 à 3 mm.

3. Robot de transport (7) selon la revendication 1 ou 2, **caractérisé en ce que** la longueur de l'élément de courroie saillant verticalement (19) est inférieure ou égale à la moitié de la longueur totale de ladite courroie (14).

4. Robot de transport (7) selon l'une au moins des revendications 1 à 3, **caractérisé en ce que** la largeur de l'élément de courroie saillant verticalement (19) correspond environ à 10 % de la largeur du produit à recevoir (2, 3).

5. Robot de transport (7) selon l'une des revendications 1 à 4, **caractérisé en ce que** ladite courroie (14) consiste en une bande plate continue, une courroie trapézoïdale, une courroie dentée, une courroie faite de cordons ou une chaîne.

6. Robot de transport (7) selon l'une des revendications 1 à 5, **caractérisé en ce que** ladite courroie (14) s'étend globalement à l'horizontale sur au moins deux poulies de renvoi.

7. Robot de transport (7) selon l'une des revendications 1 à 6, **caractérisé en ce que** ladite courroie (14) se compose de matière plastique, en particulier de polyuréthanne (PUR).

8. Robot de transport (7) selon l'une des revendications 1 à 7, **caractérisé en ce que** l'élément de courroie saillant verticalement (19) est collé ou vulcanisé sur la courroie associée (14).

9. Robot de transport (7) selon l'une des revendications 1 à 8, **caractérisé en ce qu'**il est prévu sur le convoyeur (8) plusieurs courroies (14) d'égale longueur qui sont aptes à être entraînées par un seul moteur d'entraînement (15, 16) ou par plusieurs moteurs d'entraînement (15, 16).

10. Robot de transport (7) selon la revendication 9, **caractérisé en ce qu'**il est prévu sur le convoyeur (8) au moins deux paires de courroies (14) d'égale longueur qui sont aptes à être entraînées par un moteur d'entraînement (15, 16) pour chaque paire de courroies.

11. Robot de transport (7) selon l'une des revendications 1 à 10, **caractérisé en ce que** le convoyeur (8) est un convoyeur transversal qui est mobile globalement à l'horizontale transversalement par rapport aux sens longitudinaux (24, 25) du mouvement de transport du robot de transport (7) et/ou dans ces sens longitudinaux (24, 25) et/ou horizontalement en biais par rapport à ceux-ci.

12. Robot de transport (7) selon l'une des revendications 1 à 11, **caractérisé en ce que** le convoyeur (8) est mobile indépendamment d'une commande électrique central, par l'intermédiaire de l'unité d'entraînement autonome (15, 16) qui se trouve sur le robot de transport (7).

13. Robot de transport (7) selon la revendication 12, **caractérisé en ce que** l'alimentation en énergie de l'unité d'entraînement (15, 16) pour le convoyeur (8) se fait par l'intermédiaire d'un condensateur électrolytique rechargeable à grande capacité (Gold-Cap).

14. Robot de transport (7) selon la revendication 12 ou 13, **caractérisé en ce que** l'alimentation en énergie de l'unité d'entraînement (15, 16) pour le convoyeur (8) se fait par l'intermédiaire d'un accumulateur électrique rechargeable.

15. Robot de transport (7) selon l'une des revendications 1 à 14, **caractérisé en ce que** le robot de transport (7) est sur rails et est mobile sur des rails (6) dans les sens longitudinaux (24, 25) de ceux-ci.

16. Robot de transport (7) selon l'une des revendications 1 à 14, **caractérisé en ce que** le robot de transport n'est pas sur rails et est mobile complètement librement, en deux dimensions, sur une voie de roulement.

17. Robot de transport (7) selon l'une des revendications 1 à 16, **caractérisé en ce que** le robot de transport (7) comporte une unité d'entraînement autonome, moyennant quoi il est mobile indépendamment d'une commande électrique centrale.

18. Robot de transport (7) selon l'une des revendications 1 à 17, **caractérisé en ce que** l'élément de courroie (19) est conçu comme une saillie ou comme une tige.
